Europäisches Patentamt

European Patent Office

Office européen des brevets

(19)

(11) Numéro de publication : **0 188 161 B1**

(12) **FASCICULE DE BREVET EUROPÉEN**

(45) Date de publication du fascicule du brevet :
19.07.89

(51) Int. Cl.⁴ : **F 16 L 59/16**, F 16 L 39/04

(21) Numéro de dépôt : 85402640.8

(22) Date de dépôt : 26.12.85

(54) **Dispositif formant joint tournant pour liquide cryogénique.**

(30) Priorité : 31.12.84 FR 8420119

(43) Date de publication de la demande :
23.07.86 Bulletin 86/30

(45) Mention de la délivrance du brevet :
19.07.89 Bulletin 89/29

(84) Etats contractants désignés :
DE GB IT NL

(56) Documents cités :
FR–A– 2 251 775
FR–A– 2 473 675
FR–A– 2 539 481
GB–A– 870 269
US–A– 3 921 273

(73) Titulaire : **ENTREPRISE D'EQUIPEMENTS MECANI-
QUES ET HYDRAULIQUES (E.M.H.)
196, Bureaux de la Colline
F-92213 Saint Cloud (FR)**

(72) Inventeur : **Chauvin, Jean-Michel
2 Allée Van Gogh
F-78160 Marly Le Roi (FR)**
Inventeur : **Ghilardi, Jean Pierre Roger François
156 Place des Aubépines
F-95680 Montlignon (FR)**

(74) Mandataire : **Beauchamps, Georges et al
Cabinet Z.Weinstein 20, avenue de Friedland
F-75008 Paris (FR)**

## Description

La présente invention concerne et a essentiellement pour objet un dispositif formant joint tournant pour liquide cryogénique, trouvant notamment application pour le transfert, par exemple en mer, du gaz naturel liquéfié.

On connaît déjà des dispositifs formant joint tournant pour fluide cryogénique. Par exemple, la demande de brevet FR-A-2 539 481 de la demanderesse révèle un dispositif comprenant une partie fixe et une partie rotative, chaque partie portant au moins un conduit correspondant approprié pour la circulation du fluide cryogénique à travers le joint. De plus, un tel dispositif comprend des moyens d'isolation thermique, étanches au fluide, des parties vitales du joint, comme en particulier les parties situées au niveau du plan de jonction entre partie fixe et partie rotative relativement au milieu environnant. Cependant, lors du transfert au large, par exemple entre un navire et une unité de raffinerie à terre, une certaine partie du liquide cryogénique en circulation subit une vaporisation. Le gaz ainsi formé ne peut être rejeté à l'air libre et il est nécessaire de prévoir un conduit permettant le retour de celui-ci.

Jusqu'à présent, pour résoudre ce problème, on a réalisé des ensembles formant port pourvus de deux bras indépendants de transfert de liquide cryogénique et de retour du gaz provenant du liquide vaporisé. Cependant, de telles structures de transfert sont complexes et donc coûteuses.

La présente invention a pour objet principal de fournir une structure simple et appropriée pour le transfert, en particulier en mer, de liquide cryogénique, tel que notamment du gaz naturel liquéfié, utilisant, par exemple entre un navire et une raffinerie à terre, une unité d'amarrage unique dudit navire comportant le dispositif formant joint tournant.

Pour résoudre ce problème le dispositif selon l'invention comporte les caractéristiques spécifiques énoncées dans la revendication principale.

Ainsi, une telle conception de retour annulaire du gaz froid est particulièrement simple et économique. De plus, l'architecture du retour annulaire est telle que les garnitures d'étanchéité du joint et le palier à roulement travaillant à température proche de la température ambiante peuvent être choisis parmi ceux existants déjà, ce ·qui ne nécessite aucun travail de mise au point particulier. Ce nouveau joint tournant est ainsi associable à tout joint tournant monofluide existant, de façon à former un ensemble à deux étages permettant le départ central du gaz naturel liquéfié et le retour annulaire du gaz froid.

L'invention sera mieux comprise et d'autres buts, caractéristiques et avantages de celle-ci apparaîtront plus clairement à la lecture de la description explicative qui va suivre, faite en référence aux dessins schématiques annexés illustrant plusieurs modes de réalisation actuellement préférés de l'invention, et dans lesquels :

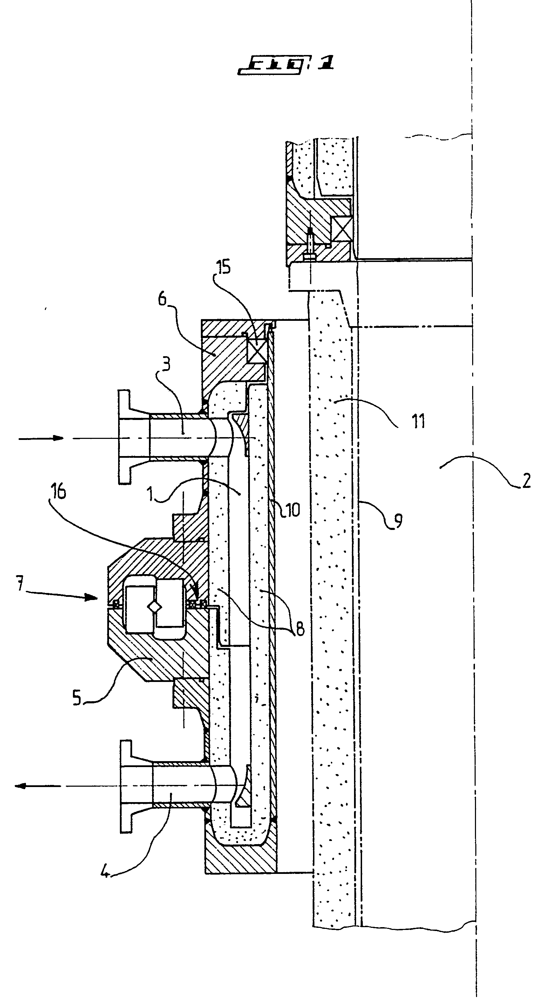

La figure 1 est une vue en demi-coupe transversale montrant le dispositif formant joint tournant selon la présente invention ;

La figure 2A est une vue partielle en coupe transversale montrant en détail la tubulure d'arrivée de gaz selon l'invention ; et

La figure 2B est une vue partielle en coupe transversale, semblable à la vue 2A d'un autre mode de réalisation de la tubulure d'entrée de gaz.

En référence aux figures annexées, le dispositif formant joint tournant pour liquide cryogénique, tel que gaz naturel liquéfié, selon la présente invention comporte un conduit central 2 approprié pour la circulation du liquide cryogénique à travers le joint. Un conduit annulaire 1 entoure coaxialement le conduit central 2. Ce conduit annulaire permet le retour de gaz froid provenant de la vaporisation du liquide, par exemple gaz naturel liquéfié en mouvement. L'étanchéité globale du retour annulaire est assurée par deux systèmes de garniture et un palier à roulement 7 permet sa mise en rotation. On a choisi une architecture de ce retour annulaire telle que les garnitures d'étanchéité et le palier à roulement sont à température proche de la tempérante ambiante, d'où l'avantage de conserver l'état de l'art pour ces éléments.

Ce nouveau joint tournant pour retour gazeux froid, par exemple de — 60 °C à — 160 °C, est associable au joint tournant monofluide, tel que celui décrit dans la demande antérieure de la demanderesse FR-A-2 539 481, de façon à former un ensemble à deux étages permettant le départ central du gaz naturel liquéfié et le retour annulaire du gaz froid provenant de la vaporisation de celui-ci, par exemple au cours de son transfert. Par ailleurs, le conduit annulaire 1 comporte des tubulures respectivement d'arrivée 3 et de départ 4 de gaz, une partie fixe 5 et une partie montée rotative 6 relativement à la partie fixe 5 au moyen du palier à roulement 7. Un système d'isolation thermique 8 est disposé de façon à isoler au moins les portions des parois fixe et mobile constituant le conduit annulaire 1 susceptibles d'être en contact avec le gaz froid. Ainsi, non seulement les garnitures d'étanchéité 15, 16 et le palier à roulement 7 sont thermiquement isolés, mais également toutes les parties métalliques susceptibles de former thermoconducteur sont recouvertes par le système d'isolation thermique précité.

De plus, entre les parois respectivement externe 9 du conduit central 2 et interne 10 du conduit annulaire 1, sont également disposés des moyens 11 d'isolation thermique, choisis de préférence de même nature que les premiers moyens d'isolation 8 précités.

Le système d'isolation thermique 8 est réalisé à base d'isolant cellulaire rigide à cellules fermées pour éviter l'absorption de gaz, tel que par exemple du polychlorure de vinyle expansé de haute densité (de l'ordre de 70 à 80 kg/m³) enveloppé dans un revêtement protecteur tel que du tissu de verre. Ce revêtement est lui-même recouvert d'un enduit tel qu'un élastomère à grand allongement relatif à froid, c'est-à-dire non fragile à froid, et de préférence adhésif pour permettre le collage du tissu de verre sur l'isolant, et pour arrêter ainsi la propagation d'éventuelles fissures de l'isolant susceptibles de créer des ponts thermiques.

Le système de garnitures d'étanchéité 15 sur la partie fixe 5 est placé par exemple à la partie supérieure pour faciliter l'accès donc la maintenance.

Par ailleurs, les isolants respectivement fixe et mobile sont fixés par exemple par collage aux parties respectivement fixe 5 et mobile 6.

Pour isoler la structure métallique du joint tournant, notamment au droit des piquages, et aussi pour empêcher l'érosion de l'isolant 8 par le contact avec le gaz froid en écoulement au droit des tubulures respectivement d'arrivée 3 et de départ 4 de gaz, chaque tubulure 3, 4 comporte un manchon, de préférence métallique 12 inséré coaxialement dans celle-ci et dépassant en saillie dans l'espace annulaire du conduit 1.

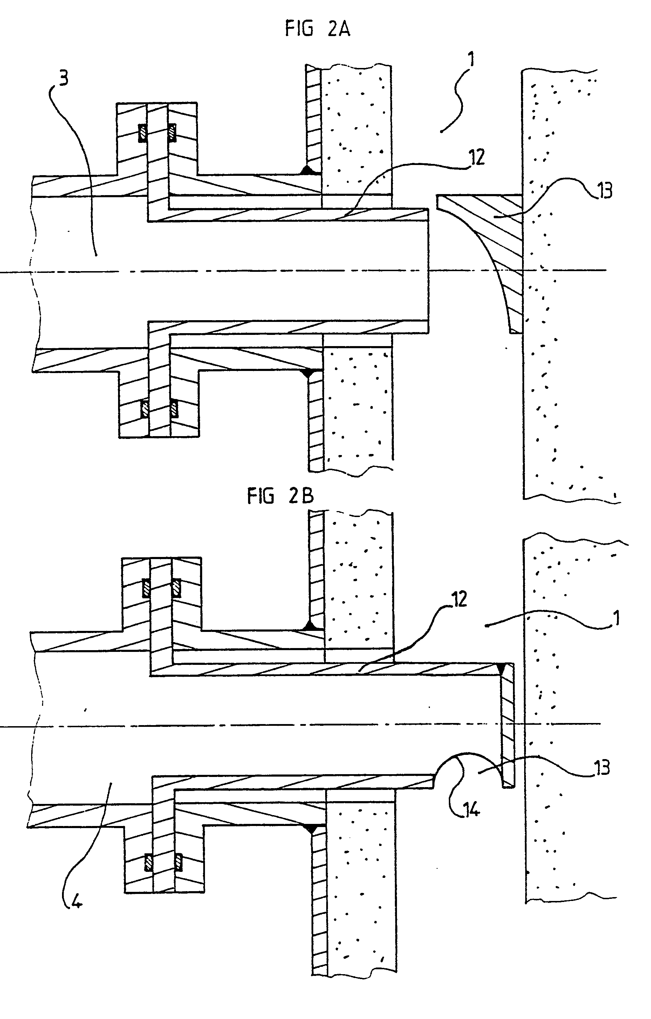

Par ailleurs, pour éviter l'érosion de l'isolant fixe 8 en face des tubulures 3 et 4 par impact direct du jet gazeux, on prévoit un déflecteur, notamment métallique fixé à l'isolant (figure 2A) ou au manchon. Dans ce dernier cas, le déflecteur précité peut être constitué par une sortie latérale 14 du manchon dont l'extrémité est alors obstruée (figure 2B).

Le retour annulaire de fluide gazeux qui vient d'être décrit pourrait éventuellement aussi servir de passage annulaire de fluide liquide (gaz naturel liquéfié) dans des systèmes à passages multiples de liquide.

De plus, un tel retour annulaire de fluide gazeux évite toute propagation de froid à travers le joint puisque toutes les parties métalliques de celui-ci, susceptibles de conduire le froid sont thermiquement isolées. On a également prévu un décroisement des surfaces de séparation des isolants mobile et fixe au droit du palier à roulement 7 pour éviter toute propagation de froid dans celui-ci.

Cet agencement en chicane de l'isolant prévient également avantageusement toute mise en froid par convection ou rayonnement des deux jeux de garnitures.

## Revendications

1. Dispositif formant joint tournant pour liquide cryogénique, tel que du gaz naturel liquéfié, du type comprenant au moins un conduit central pour la circulation dudit liquide cryogénique à travers le joint, comportant une portion fixe et une portion rotative, au moins un conduit annulaire (1) entourant coaxialement ledit conduit central (2) et comportant une partie fixe (5) et une partie rotative (6) relativement à la partie fixe au moyen d'un palier à roulement (7) et un double jeu de garnitures d'étanchéité (15, 16), le conduit tubulaire (1) comprenant des tubulures d'arrivée (3) et de départ (4) dont l'une est associée à la partie fixe (5) et l'autre à la partie mobile (6) du conduit annulaire (1) pour permettre l'écoulement d'un fluide à travers de celui-ci, caractérisé en ce que ledit conduit annulaire (1) forme un conduit pour le retour du gaz froid provenant de la vaporisation du liquide en mouvement, les parois internes des parties fixe (5) et mobile (6) du conduit annulaire (1) sont recouvertes de premiers moyens (8) d'isolation thermique, ledit palier à roulement (7) et lesdites garnitures (15, 16) étant disposés à l'extérieur dudit conduit tubulaire (1) de façon à pouvoir travailler à une température proche de la température ambiante.

2. Dispositif selon la revendication 1, caractérisé en ce que l'on prévoit, entre les parois respectivement externe (9) du conduit central (2) précité et interne (10) du conduit annulaire (1) précité des seconds moyens (11) d'isolation thermique, de préférence de même nature que les premiers moyens d'isolation (8) précités.

3. Dispositif selon la revendication 1, caractérisé en ce que les premiers moyens (8) d'isolation thermique précités sont réalisés à base d'isolant cellulaire rigide à cellules fermées, tel que par exemple du polychlorure de vinyle expansé de haute densité enrobé dans un revêtement protecteur tel que tissu de verre recouvert d'un enduit de préférence adhésif.

4. Dispositif selon l'une des revendications 1 à 3, caractérisé en ce que chaque tubulure (3, 4) précitée comporte un manchon (12), notamment métallique, inséré coaxialement dans celle-ci avec un jeu, et dépassant en saillie dans le conduit annulaire (1) précité.

5. Dispositif selon la revendication 4, caractérisé en ce que au droit de chaque tubulure (3, 4) précitée est prévu un moyen déflecteur (13) notamment métallique, du gaz entrant et sortant.

6. Dispositif selon la revendication 5, caractérisé en ce que le moyen déflecteur (13) précité est fixé soit aux premiers moyens isolants (8) précités, soit au manchon (12) précité.

7. Dispositif selon la revendication 5, caractérisé en ce que le moyen déflecteur (13) précité est constitué par au moins une sortie latérale (14) du manchon (12) précité, dont l'extrémité est alors obstruée.

## Claims

1. Device forming a rotary joint for a cryogenic liquid, such as liquified natural gas, of the type including at least one central conduit for the circulation of the said cryogenic liquid through the joint, comprising a fixed part and a rotary part, at least one annular conduit (1) coaxially surrounding the said central conduit (2) and comprising a fixed portion (5) and a portion mounted rotatably (6) with respect to the said fixed portion by means of a rolling bearing (7) and a double set of gaskets (15, 16), the annular conduit (1) including respectively incoming (3) and outgoing (4) pipes, of which the one is associated to the fixed portion (5) and the other is associated to the movable portion (6) of the annular conduit (1) to make it possible for a fluid to flow through the same, characterized in that the said annular conduit (1) forms a conduit for the return of the cold gas resulting from the vaporization of the liquid in motion, the inner walls of the fixed (5) and movable (6) portions of the annular conduit (1) being covered with first means (8) of thermal insulation, the said rolling bearing (7) and the said gaskets (15, 16) being arranged inside the said annular conduit (1) so as to be in a condition to work at a temperature close to the ambient temperature.

2. Device according to claim 1, characterized in that there are provided, between the respectively external wall (9) of the aforesaid central conduit (2) and the internal wall (10) of the aforesaid annular conduit (1) second means (11) of thermal insulation, preferably of the same nature as the first aforesaid insulation means (8).

3. Device according to claim 1, characterized in that the aforesaid first means (8) of thermal insulation are designed on the basis of a rigid cellular insulator with closed cells, such as for example expanded polyvinyl chloride of high density wrapped in a protective covering such as glass cloth covered with a preferably adhesive coating.

4. Device according to one of claims 1 to 3, characterized in that each aforesaid pipe (3, 4) is provided with a notably metallic sleeve (12), inserted coaxially in the latter with a clearance, and projecting into the aforesaid annular conduit (1).

5. Device according to claim 4, characterized in that at each aforesaid pipe (3, 4) is provided a notably metallic deflecting means (13) for the incoming and outgoing gas.

6. Device according to claim 5, characterized in that the aforesaid deflecting means (13) is fixed either to the aforesaid first insulating means (8) or to the aforesaid sleeve (12).

7. Device according to claim 5, characterized in that the aforesaid deflecting means (13) is constituted by at least one lateral outlet (14) of the aforesaid sleeve (12), whose end is then choked.

**Patentansprüche**

1. Eine Drehverbindung bildende Vorrichtung für eine Tiefsttemperaturflüssigkeit wie ein verflüssigtes Erdgas, der Gattung, die wenigstens eine für das Strömen der besagten Tiefsttemperaturflüssigkeit durch die Verbindung hindurch geeignete entsprechende, einen festen Teil und einen drehbar angeordneten Teil aufweisende Zentralleitung, wenigstens eine die besagte Zentralleitung (2) koaxial umgebende und einen festen Teil (5) und einen gegenüber dem festen Teil mittels eines Rollagers (7) drehbar angeordneten Teil (6) und einen doppelten Satz von Dichtungen (15, 16) aufweisende ringförmige Leitung (1) umfaßt, wobei die ringförmige Leitung (1) jeweils einen Gaszufuhrrohrstutzen (3) und einen Gasabfuhrrohrstutzen (4) aufweist, von denen der eine dem festen Teil (5) und der andere dem drehbar angeordneten Teil (6) der ringförmigen Leitung (1) zugeordnet ist, um das Strömen eines flüssigen oder gasförmigen Körpers durch diese zu ermöglichen, dadurch gekennzeichnet, daß die besagte ringförmige Leitung (1) eine Leitung für die Rückführung des von der Verdampfung der sich bewegenden Flüssigkeit herkommenden kalten Gases bildet, daß die inneren Wandungen des festen Teils (5) und des beweglichen Teils (6) der ringförmigen Leitung (1) von ersten Mitteln (8) zur Wärmeisolierung bedeckt sind, wobei das besagte Rollager (7) und die besagten Dichtungen (15, 16) innerhalb der besagten ringförmigen Leitung (1) derart angeordnet sind, daß sie bei einer der Umgebungstemperatur nahen Temperatur arbeiten können.

2. Vorrichtung nach Anspruch 1, dadurch gekennzeichnet, daß man zweite Wärmeisolierungsmittel (11) vorzugsweise mit derselben Beschaffenheit wie die vorgenannten ersten Isolierungsmittel (8) jeweils zwischen der Außenwandung (9) der vorgenannten Zentralleitung (2) und der Innenwandung (10) der vorgenannten ringförmigen Leitung (1) vorsieht.

3. Vorrichtung nach Anspruch 1, dadurch gekennzeichnet, daß die vorgenannten ersten Wärmeisolierungsmittel (8) aus einem zelligen Wärmedämmstoff mit geschlossenen Zellen wie z. B. expandiertem Polyvinylchlorid hoher Dichte hergestellt ist, welcher in einer Schutzumkleidung wie einem mit einem vorzugsweise klebenden Anstrich überzogenen Glasgewebe eingehüllt ist.

4. Vorrichtung nach einem der Ansprüche 1 bis 3, dadurch gekennzeichnet, daß jeder vorgenannte Rohrstutzen (3, 4) eine koaxial mit Spiel in diesem eingesetzte und in die vorgenannte rohrförmige Leitung (1) hineinragende insbesondere metallische Muffe (12) aufweist.

5. Vorrichtung nach Anspruch 4, dadurch gekennzeichnet, daß im Bereich jedes vorgenannten Rohrstutzens (3, 4) ein insbesondere metallisches Ablenkmittel (13) für das ein- bzw. ausströmende Gas vorgesehen ist.

6. Vorrichtung nach Anspruch 5, dadurch gekennzeichnet, daß das vorgenannte Ablenkmittel (13) entweder an den vorgenannten ersten Isoliermitteln (8) oder an der vorgenannten Muffe (12) befestigt ist.

7. Vorrichtung nach Anspruch 6, dadurch gekennzeichnet, daß das vorgenannte Ablenkmittel (13) aus wenigstens einem Seitenauslaß (14) der vorgenannten Muffe (12), dessen Ende dann verstopft ist, besteht.

EP 0 188 161 B1

Fig. 1

1

FIG 2A

FIG 2B